(19) Europäisches Patentamt / European Patent Office / Office européen des brevets

(11) **EP 2 721 857 B1**

(12) **FASCICULE DE BREVET EUROPEEN**

(45) Date de publication et mention
de la délivrance du brevet:
**04.08.2021 Bulletin 2021/31**

(21) Numéro de dépôt: **12731574.5**

(22) Date de dépôt: **15.06.2012**

(51) Int Cl.:
*H04W 12/06* (2021.01)    *H04W 12/106* (2021.01)
*H04W 12/121* (2021.01)    *H04W 12/126* (2021.01)

(86) Numéro de dépôt international:
**PCT/FR2012/051352**

(87) Numéro de publication internationale:
**WO 2012/172267 (20.12.2012 Gazette 2012/51)**

(54) **PROCÉDÉ DE TRAITEMENT D'UN PAQUET DE DONNÉES A L'ÉMISSION, PROCÉDÉ DE TRAITEMENT D'UN PAQUET DE DONNÉES À LA RÉCEPTION, DISPOSITIFS ET ÉQUIPEMENTS DE NOEUDS ASSOCIÉS**

VERFAHREN ZUR VERARBEITUNG EINES DATENPAKETS BEIM SENDEN, VERFAHREN ZUR VERARBEITUNG EINES DATENPAKETS BEIM EMPFANG, VORRICHTUNG UND KNOTENANLAGE DAMIT

METHOD OF PROCESSING A DATA PACKET ON TRANSMISSION, METHOD OF PROCESSING A DATA PACKET ON RECEPTION, DEVICE AND NODE EQUIPMENT ASSOCIATED THEREWITH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.06.2011 FR 1155328**

(43) Date de publication de la demande:
**23.04.2014 Bulletin 2014/17**

(73) Titulaire: **ORANGE**
**92130 Issy-les-Moulineaux (FR)**

(72) Inventeurs:
• **KOUNTOURIS, Apostolos**
**F-38000 Grenoble (FR)**
• **BARTHEL, Dominique**
**F-38190 Bernin (FR)**
• **DOHLER, Michael**
**E-08024 Barcelona (ES)**
• **BARTOLI, Andrea**
**E-08012 Barcelona (ES)**
• **SERRANO, Juan Hernandez**
**E-08005 Barcelona (ES)**
• **SORIANO, Miguel**
**E-08028 Barcelona (ES)**

(56) Documents cités:
**US-A1- 2004 259 529    US-B1- 6 229 806**

• **ANDREA BARTOLI ET AL: "Low-Power Low-Rate Goes Long-Range: The Case for Secure and Cooperative Machine-to-Machine Communications", 13 mai 2011 (2011-05-13), NETWORKING 2011 WORKSHOPS, SPRINGER BERLIN HEIDELBERG, BERLIN, HEIDELBERG, PAGE(S) 219 - 230, XP019163032, ISBN: 978-3-642-23040-0 le document en entier**
• **None**

EP 2 721 857 B1

**Description**

### 1. Domaine de l'invention

Le domaine de l'invention est celui des télécommunications, et plus particulièrement à la sécurisation des télécommunications dans un réseau de communications électroniques sans fil.

La présente invention concerne un procédé de traitement d'un paquet de données à la réception, par un équipement nœud dudit réseau de communication sans fil.

La présente invention concerne aussi un procédé de traitement d'un paquet de données à l'émission, par un équipement nœud dudit réseau de communication sans fil.

La présente invention concerne également un dispositif d'émission d'un tel paquet sur un tel lien. Elle concerne en outre un dispositif de réception d'un tel paquet

L'invention s'applique de manière avantageuse aux réseaux de capteurs, dans lesquels des capteurs fonctionnant sur batterie sont soumis à des contraintes énergétiques fortes.

De tels capteurs faible puissance ont une espérance de vie allant de quelques années à quelques dizaines d'années. Cette espérance de vie est d'autant plus longue qu'ils sont temporairement éteints ou mis hors tension ("duty cycling"). Le duty cycling permet de s'assurer que les activités mettant en œuvre des opérations nécessitant une forte énergie sont minimisées.

Les paquets reçus par un nœud capteur peuvent lui être spécifiquement destinés ou non. Les paquets qui ne lui sont pas destinés peuvent être malintentionnés ou légitimes. Typiquement, les paquets non destinés sont reçus intégralement, puis sont rejetés par les couches supérieures en raison par exemple du défaut de correspondance de l'adresse MAC ou de l'adresse IP.

### 2. Inconvénients de l'art antérieur

L'énergie dépensée par le nœud capteur pour traiter les paquets à rejeter n'est pas du tout négligeable. Les paquets qui ne lui sont pas destinés mais légitimes, qu'on appellera dans la suite paquets non pertinents, arrivent à une fréquence plutôt régulière qui dépend de la cardinalité du voisinage et des taux de transmission des nœuds voisins. Ces paquets non pertinents proviennent généralement de nœuds voisins à un saut du nœud récepteur. Il peut s'agir aussi bien de paquets de données que de paquets de contrôle. Typiquement, l'énergie est dépensée lors de la réception du paquet dans son intégralité, la mise en œuvre de procédures de sécurité sur le paquet entier et de vérification de l'adresse de destination. C'est seulement à l'issue de ces différentes opérations que le paquet est rejeté.

A titre d'exemples de paquets non pertinents, on peut citer des paquets de données unicast destinés à d'autres nœuds que le nœud courant, des paquets de données diffusés de façon redondante, des paquets de contrôle de poignées de mail (« handshaking », en anglais) ou encore des paquets de contrôle utilisés dans le cadre de procédure de contrôle d'accès aléatoire.

Le filtrage de paquets non pertinents peut être évité à l'aide d'un filtrage de l'adresse de destination du paquet. On peut aussi programmer les liens de communication de façon à ce que l'émetteur et le récepteur se réveillent à des instants spécifiques fixés a priori. Il est aussi connu de déployer de courts préambules contenant l'information nécessaire relative à la destination du paquet, de façon à permettre aux nœuds récepteurs non destinataires du paquet en question de se rendormir avant que le long paquet de données leur parvienne.

Toutefois, aucune de ces techniques ne permet d'éviter la sur-écoute (« overhearing » en anglais). En effet, elles ne font que prévoir des traitements spécifiques supplémentaires à ceux nécessaires à la réception d'un paquet accessible par voie radio par l'équipement nœud.

Des paquets non destinés mais cette fois, mal-intentionnés alimentent des attaques DoS avec comme objectif celui de faire disparaître la disponibilité d'un équipement ou d'un lien. Des attaques typiques dans les réseaux faible puissance sont des attaques d'épuisement (« exhaustion attacks », en anglais) qui visent à décharger la batterie d'un équipement. Pour lutter contre ce type d'attaque, des solutions ont été déployées.

Un exemple d'attaque DoS exploite le mécanisme de poignée de main RTS/CTS (request-to-send/clear-to-send) bidirectionnel que de nombreux protocoles de la couche MAC utilisent pour faire face au problème des nœuds cachés. Un attaquant peut épuiser les ressources d'un nœud en envoyant de façon répétée des messages RTS pour déclencher l'envoi de réponses CTS par un nœud voisin cible. Une authentification contraignante au niveau de la couche liaison peut permettre d'éviter à de telles attaques d'aboutir. Toutefois, le nœud cible qui reçoit les messages RTS n'en consomme pas moins de l'énergie et de la bande passante.

Une autre attaque DoS consiste à injecter du trafic inadapté dans le réseau. Un attaquant peut envoyer un paquet dans le réseau avec pour seule intention de provoquer la consommation d'énergie par les nœuds impliqués dans le routage de ce paquet vers son équipement de destination.

La réponse traditionnellement apportée à ce type d'attaque consiste, comme déjà évoqué, à renforcer l'authentification du paquet au niveau de la couche de liaison pour limiter le taux d'admission des paquets par la couche MAC en n'accordant à un nœud l'accès au canal pour un intervalle de temps court. Une autre solution repose sur une détection collaborative de modèles de trafic anormaux pour certains nœuds (« trust framework », en anglais).

On connait du document US2004/0259529 une solution d'authentification d'un nœud source par le nœud récepteur d'un paquet à partir d'un en-tête d'authentification, d'une zone prédéterminée d'informations du paquet et d'une clé partagée avec le nœud source. Si l'authentification obtient un résultat négatif, le paquet de données est rejeté. Le nœud récepteur peut déconnecter le nœud source et transmettre un signal aux autres nœuds du réseau.

On connait du document US 6, 229, 806 un système de communication de paquets de données entre un terminal émetteur et un équipement du réseau, qui consiste à insérer dans le paquet de données, suite à l'en-tête, des informations d'authentification du terminal émetteur. Ces informations sont utilisées par un équipement intermédiaire, suite à la réception du paquet de données pour authentifier le terminal émetteur et pour mettre en œuvre un enregistrement automatique du terminal émetteur par l'équipement du réseau.

Toutefois, ces techniques n'apportent pas une sécurité suffisante ce qui fait qu'elles échouent dans la prévention efficace des attaques DoS. Finalement, un équipement nœud est donc amené à traiter un nombre non négligeable de paquets mal intentionnés.

Il existe donc un besoin d'une solution efficace pour lutter efficacement contre les attaques de déni de service tout en évitant de mettre un nœud en situation de sur-écoute.

## 3. **Résumé de l'invention**

L'invention vient améliorer la situation en proposant un procédé de traitement d'un paquet de données à sa réception, ledit paquet de données ayant été transmis par un premier équipement nœud à destination d'un deuxième équipement nœud sur un lien d'un réseau de communication électronique sans fil, ledit paquet comprenant un en-tête et des données utiles. Selon l'invention, ledit procédé comprend une étape de réception du paquet de données en deux phases, une première phase de réception de l'en-tête et une deuxième phase de réception des données utiles, la première phase comprenant les étapes suivantes mises en œuvre par le deuxième équipement nœud, sur réception d'un en-tête dudit paquet de données :

- Détection d'un préambule d'authentification du lien dans l'en-tête reçu;
- Authentification du lien à l'aide du préambule d'authentification détecté.
- Décision de déclenchement de la deuxième phase de réception des données utiles du paquet de données en cas de résultat positif de l'authentification.

L'insertion dans l'en-tête du paquet de données d'un préambule d'authentification du lien entre l'équipement nœud émetteur et l'équipement nœud récepteur permet une authentification du lien à partir de la réception du seul en-tête du paquet de données par le deuxième nœud.

La réception du paquet de données se fait donc en deux phases : d'abord la réception de l'en-tête du paquet comprenant l'authentification du lien, puis, si l'étape d'authentification du lien est un succès, la phase de réception des données utiles du paquet.

Ainsi le deuxième nœud peut-il prendre la décision de continuer la réception du paquet de données si l'étape d'authentification du lien a réussi ou au contraire, d'interrompre la réception du paquet de données et de le rejeter en cas d'échec de l'authentification du lien. Dans ce dernier cas, le paquet de données est donc rejeté avant même que les données utiles n'aient été reçues.

Avec l'invention et contrairement à l'art antérieur, il est donc possible pour le deuxième nœud d'authentifier un paquet de données sans le recevoir intégralement.

Le fait de mener une authentification sur la base de l'en-tête seul va à l'encontre de la pratique courante de l'homme du métier. En effet, il est généralement admis qu'une authentification s'appuie notamment sur un calcul de type « checksum » qui nécessite la réception préalable de l'intégralité du paquet.

L'invention propose donc une approche nouvelle et inventive basée sur l'authentification du lien entre deux nœuds, plutôt que l'authentification du paquet lui-même. Cette approche présente l'avantage de réduire au minimum l'énergie dépensée par le deuxième nœud pour traiter les paquets qu'il reçoit. Il désamorce ainsi les attaques de déni de service sans se mettre en situation de sur-écoute, puisqu'il ne consacre que peu de ressources à rejeter les paquets mal intentionnés.

Un avantage de l'invention est qu'elle permet en outre de traiter les paquets non pertinents à moindre coût.

Selon un aspect de l'invention, le préambule d'authentification détecté ayant une valeur fonction d'au moins un attribut partagé par le premier et le deuxième nœud, l'étape d'authentification comprend les sous-étapes suivantes :

- comparaison du préambule d'authentification détecté avec un préambule d'authentification de référence généré en fonction dudit au moins un attribut ;

- décision en fonction du résultat de la comparaison.

Le fait de partager la connaissance de la valeur d'au moins un attribut du lien et de l'utiliser pour calculer le préambule d'authentification, rend l'authentification plus fiable.

Selon un autre aspect, le procédé selon l'invention comprend une étape préalable de génération d'au moins un préambule d'authentification de référence pour le lien avec le premier nœud à partir d'au moins un attribut partagé avec le premier nœud et une étape de stockage dudit au moins un préambule d'authentification de référence généré en mémoire.

Le fait de calculer au préalable une ou plusieurs valeurs de préambules d'authentification de référence pour le lien considéré permet de limiter le temps d'analyse du préambule du paquet à sa réception par l'équipement nœud.

Selon encore un autre aspect de l'invention, ledit au moins un attribut appartient au groupe comprend :

- un attribut d'identification du lien ;
- un attribut d'authentification du lien ; et
- un attribut de fraîcheur du paquet de données.

Le partage de tels attributs par les équipements nœuds émetteurs et récepteurs, permet d'authentifier de façon fiable à la fois le lien et le paquet de données.

Selon encore un autre aspect de l'invention, l'étape de génération d'un préambule d'authentification de référence est mise en œuvre à partir d'un attribut d'identification {IDu,IDv}, d'un attribut d'authentification (Ku,v) et d'un attribut de fraîcheur (i) et d'un code de message $H(k,m)$ fonction d'une donnée m et d'une clé k, selon l'équation suivante :

$$F_i^{u \to v}\big|_{K_{u-v}} = \begin{cases} H(\{ID_u, ID_v\}, K_{u-v}) & pour \quad i = 0 \\ H\left(F_{i-1}^{u \to v}\big|_{K_{u-v}}, K_{u-v}\right) & sin\,on \end{cases},$$

i, m et k étant des entiers non nuls.

Un avantage de cette étape de génération d'un préambule est qu'elle permet de calculer itérativement le préambule d'authentification du paquet courant à partir de celui du paquet précédent.

L'invention définie par les revendications indépendantes ci-jointes concerne également un procédé de traitement d'un paquet de données à l'émission par un premier équipement nœud d'un réseau de communication électroniques sans fil, ledit paquet de données étant destiné à être transmis à un deuxième équipement nœud sur un lien du réseau de communication électronique sans fil, ledit paquet de données comprenant un en-tête et des données utiles,

Selon l'invention, ledit procédé comprend une étape d'insertion d'un préambule d'authentification du lien dans l'en-tête du paquet de données.

Selon un aspect de l'invention, l'en-tête du paquet de données comprenant au moins un en-tête de couche physique suivi d'un en-tête de couche MAC, le préambule d'authentification est inséré dans l'en-tête du paquet de données à une position dans le groupe comprenant les positions suivantes :

- à la fin de l'en-tête de la couche physique;
- dans le préambule de couche physique, entre un champ de début de trame et un champ de longueur de trame;
- dans l'en-tête de la couche physique, après un préambule de synchronisation ;
- dans l'en-tête de la couche physique, à la place du préambule de synchronisation ;
- dans l'en-tête de la couche physique, à la place du champ de début de trame ;
- dans l'en-tête de la couche MAC, après un champ de contrôle de trame.

Le préambule d'authentification généré peut être inséré à différents endroits de l'en-tête du paquet. Avantageusement, il est inséré en début d'en-tête, de façon à permettre de déclencher au plus tôt l'étape d'authentification du paquet selon l'invention.

Ainsi, le procédé de traitement selon l'invention permet de décider de la suite à donner à la réception d'un paquet de données dès les couches basses du modèle OSI.

L'invention concerne aussi un dispositif de traitement d'un paquet de données à la réception apte à mettre en œuvre le procédé de traitement à l'émission selon l'invention et qui vient d'être décrit. Un tel dispositif peut avantageusement être intégré dans un équipement nœud d'un réseau de communications électroniques sans fil.

L'invention concerne aussi un dispositif de traitement d'un paquet de données à l'émission apte à mettre en œuvre le procédé de traitement à l'émission selon l'invention et qui vient d'être décrit. Un tel dispositif peut avantageusement être intégré dans un équipement nœud d'un réseau de communications électroniques sans fil.

L'invention concerne aussi un équipement nœud comprenant un dispositif d'émission d'un paquet de données et un dispositif de réception d'un paquet de données selon l'invention.

L'invention concerne également un réseau de communications électroniques sans fil comprenant une pluralité d'équipements nœuds selon l'invention.

L'invention concerne encore un programme d'ordinateur comportant des instructions pour la mise en œuvre d'un procédé de traitement à la réception tel que décrit précédemment, lorsque ce programme est exécuté par un processeur. Un tel programme peut utiliser n'importe quel langage de programmation. Il peut être téléchargé depuis un réseau de communication et/ou enregistré sur un support lisible par ordinateur.

L'invention concerne enfin un programme d'ordinateur comportant des instructions pour la mise en œuvre d'un procédé de traitement à l'émission tel que décrit précédemment, lorsque ce programme est exécuté par un processeur. Un tel programme peut utiliser n'importe quel langage de programmation. Il peut être téléchargé depuis un réseau de communication et/ou enregistré sur un support lisible par ordinateur.

## 4. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure 1 présente de façon schématique un réseau de communication électronique auquel sont connectés des équipements nœuds selon l'invention ;
- la figure 2 présente de façon schématique la structure d'un équipement nœud selon l'invention ;;
- la figure 3 présente de façon schématique les étapes du procédé de traitement d'un paquet de données à l'émission et celles du procédé de traitement d'un paquet de données à la réception selon l'invention et
- la figure 4 présente des exemples de structure d'un paquet de données selon l'invention.

## 5. Description d'un mode de réalisation particulier de l'invention

Le principe général de l'invention repose sur l'insertion d'un préambule d'authentification dans l'en-tête d'un paquet de données avant son émission sur un lien entre un premier équipement nœud et un deuxième équipement nœud connecté à un réseau de communications électroniques. Un tel préambule est partagé par le premier et le deuxième équipement nœud. Il est utilisé par le deuxième équipement nœud pour authentifier le lien à partir de la lecture du seul en-tête du paquet de données et décider s'il peut recevoir en sécurité l'intégralité du paquet de données.

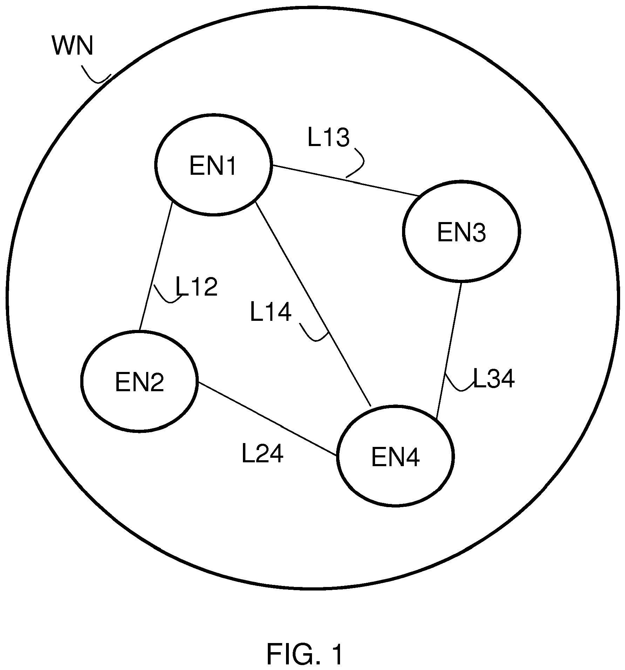

En relation avec la **figure 1,** on considère un réseau de communications électroniques WN, auquel sont connectés par des liaisons sans fil une pluralité d'équipements nœuds. Il s'agit, par exemple d'un réseau de communications cellulaires, de type GSM ou des générations suivantes ou bien d'un réseau de capteurs. Dans le premier cas, les équipements nœuds sont des téléphones mobiles. Dans le deuxième cas, les équipements nœuds sont des capteurs, préférentiellement embarqués ou sur piles, donc soumis à des contraintes énergétiques fortes.

Sur la figure 1, on a représenté de façon schématique quatre équipements nœuds EN1 à EN4 reliés entre eux par les liens sans fil L12, L13, L14, L24 et L34. L'équipement nœud EN1 est dans le voisinage direct des trois autres équipements nœuds EN2, EN3 et EN4. Lorsqu'un des équipements nœuds de ce voisinage, par exemple EN2 envoie un message par voie radio à un autre équipement nœud de ce voisinage, par exemple EN4, l'équipement nœud EN1 est en situation d'écouter ce message, qui ne lui est pourtant pas destiné. On comprend donc que selon la cardinalité du voisinage qui l'entoure et de l'intensité du trafic dans ce voisinage, un équipement nœud peut être soumis à une sur-écoute importante.

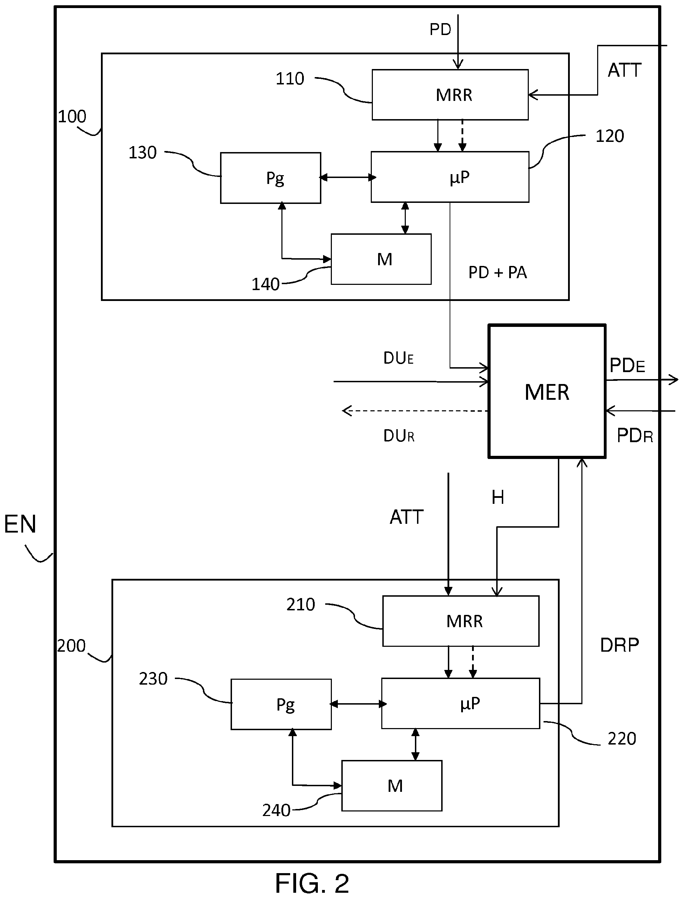

En relation avec la **figure 2,** on présente maintenant la structure d'un équipement nœud EN selon l'invention.

Selon un premier aspect de l'invention, cet équipement nœud EN comprend un dispositif 100 de traitement d'un paquet de données avant son émission sur un lien entre l'équipement nœud et un deuxième équipement nœud du réseau.

Le dispositif de traitement 100 selon l'invention comprend un module de réception 110 apte à recevoir un paquet de données PD comprenant des données utiles DU que l'équipement nœud EN prévoit d'émettre à destination d'autres équipements nœuds du réseau WN. Le paquet est traité par une unité de traitement 120 équipée d'un microprocesseur apte à mettre en œuvre les moyens constitutifs de l'invention, en particulier, des moyens de calcul et d'insertion d'un préambule d'authentification PA du lien dans l'en-tête du paquet de données PD à émettre. Dans un mode de réalisation particulier de l'invention, les moyens de calcul sont aptes à prendre en compte au moins un attribut ATT du lien entre EN et l'équipement nœud destinataire du paquet PD, pour le calcul du préambule PA.

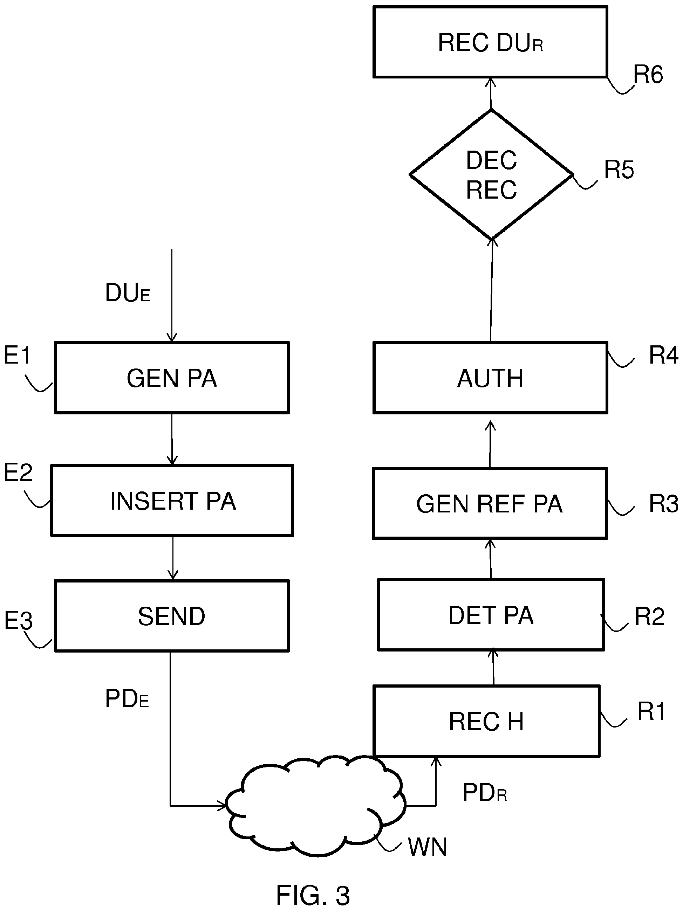

Le dispositif de traitement 100 selon l'invention comprend en outre une mémoire 140 dans laquelle est stockée un programme d'ordinateur 130 mettant en œuvre les étapes du procédé de traitement à l'émission selon l'invention, qui sera décrit de façon plus détaillée, en relation avec la figure 3. A l'initialisation, les instructions de code du programme d'ordinateur 130 sont par exemple chargées dans une mémoire RAM avant d'être exécutées par le processeur de l'unité de traitement 120.

Selon un deuxième aspect de l'invention, cet équipement nœud EN comprend en outre un dispositif 200 de traitement d'un paquet de données à la réception sur un lien entre un premier équipement nœud du réseau et l'équipement nœud EN.

Le dispositif de traitement 200 selon l'invention comprend un module de réception 210 apte à recevoir des données transmises par le module d'émission/réception radio EMR de l'équipement nœud EN en provenance d'autres équipements nœuds du réseau WN. En particulier, le module de réception 210 est apte à commander, dans une première phase, la réception des données dites de contrôles contenues dans l'en-tête H d'un paquet de données, PD' par le module EMR. Les données de contrôle H sont ensuite traitées par une unité de traitement 220 équipée d'un microprocesseur apte à mettre en œuvre les moyens constitutifs de l'invention, en particulier, des moyens de détection d'un préambule d'authentification du lien dans l'en-tête du paquet de données à recevoir, des moyens d'authentification du lien à l'aide du préambule détecté et des moyens de décision DRP de déclenchement d'une deuxième phase de réception des données utiles DU', auprès du module d'émission réception EMR, en cas de résultat positif de l'authentification.

Le dispositif de traitement 200 selon l'invention comprend en outre une mémoire 240 dans laquelle est stockée un programme d'ordinateur 230 mettant en œuvre les étapes du procédé de traitement à la réception selon l'invention, qui sera décrit de façon plus détaillée, en relation avec la figure 3. A l'initialisation, les instructions de code du programme d'ordinateur 230 sont par exemple chargées dans une mémoire RAM avant d'être exécutées par le processeur de l'unité de traitement 220.

Les procédés de traitements mis en œuvre à l'émission du paquet de données et à sa réception par l'équipement nœud EN dans un mode de réalisation de l'invention vont maintenant être décrits en relation avec la **Figure 3.**

On considère d'abord le procédé de traitement mis en œuvre par un équipement nœud EN1 en vue de l'émission d'un paquet de données $PD_E$ sur un lien L12 avec un deuxième équipement nœud EN2.

On suppose qu'au préalable, les équipements nœuds EN1 et EN2 ont convenu de partager au moins un attribut $ATT_{AL}$ relatif à l'authentification du lien L12, un attribut $ATT_{IL}$ relatif à l'identification du lien L12 et un attribut relatif à la fraîcheur du paquet de données à transmettre sur le lien L12. On considère que ce ou ces attributs sont échangés de façon sécurisée et connue, par exemple lors du déploiement du réseau. Il est entendu que les valeurs de ces attributs ne doivent pas être accessibles par d'autres équipements nœuds.

Selon l'invention, l'attribut $ATT_{AL}$ relatif à l'authentification est par exemple une clé de groupe, telle qu'une clé de réseau partagée par un groupe d'équipements nœuds, ou un clé « pair-wise », telle qu'une clé partagée par un couple d'équipements nœuds, ou encore une combinaison des deux types de clés.

En ce qui concerne l'attribut d'identification du lien $ATT_{IL}$, il s'agit d'une information à partir de laquelle il est possible de vérifier l'identité des participants à la communication, en l'espèce celle du premier et du deuxième équipement nœud, et surtout de distinguer les utilisateurs légitimes des intrus.

On entend par information relative à la fraîcheur, ou autrement dit à l'actualité du paquet une information permettant de vérifier que le paquet candidat à la réception n'est pas un paquet réémis et que l'en-tête n'a pas été recopié. Il peut s'agir par exemple :

- d'une estampille temporelle absolue, destinée à traverser l'ensemble du réseau considéré (« system wide », en anglais) ;
- d'une estampille temporelle relative à une synchronisation du lien ;
- d'un compteur de paquet ou de trame spécifique au lien considéré.

Un sous-ensemble échantillonné de ces attributs dans le temps peut aussi valablement être utilisé. Un attribut de fraîcheur peut par exemple la valeur moyenne d'un des ces attributs sur une période de 10 secondes.

Au cours d'une première étape E1, l'équipement nœud émetteur E1 génère un préambule d'authentification à l'aide des attributs $ATT_{AL}$, $ATT_{IL}$, $ATT_P$.

Dans la suite, pour des raisons de clarté, on désignera par u l'équipement nœud émetteur EN1 et par v l'équipement nœud récepteur EN2. L'équipement nœud u génère au cours de cette première étape E1 un préambule d'authentification AF de longueur I, avec I entier non nul.

L'équipement nœud u est identifié de façon unique à l'aide d'un identifiant IDu et l'équipement nœud v est identifié de façon unique à l'aide d'un identifiant IDv.

Dans l'exemple de mise en œuvre de l'étape E1 qui va être détaillé ci après, les trois attributs $ATT_{AL}$, $ATT_{IL}$, $ATT_P$ sont choisis comme suit :

- l'attribut de fraîcheur précédemment évoqué, est dans cet exemple, un compteur $\tau$ de trame des paquets qui ont circulé sur le lien entre l'équipement nœud et l'équipement nœud v ;
- l'attribut d'authentification est une clé K(u, v) ou secret partagé par le couple (u, v) ; et
- l'attribut d'identification du lien est formé par la concaténation des identifiants IDu et IDv, {IDu,IDv}.

Dans cet exemple de réalisation, le préambule d'authentification $F_i^{u \to v}\big|_{K\,u-v}$ est généré par l'équipement nœud u pour le i$^{\text{ème}}$ paquet émis par l'équipement nœud u vers l'équipement nœud v, à partir des trois attributs ci-dessus, de la façon suivante :

$$F_i^{u \to v}\big|_{K u-v} = \begin{cases} H\big(\{ID_u, ID_v\}, K_{u-v}\big) & pour \quad i = 0 \\ H\big(F_{i-1}^{u \to v}\big|_{K u-v}, K_{u-v}\big) & sinon \end{cases} \quad (1),$$

les variables i, k et m étant des entiers non nuls.

Dans l'équation (1), la fonction H(k,m) fournit un code d'authentification de message (« Message Authentication Code », MAC, en anglais). De façon connue, ce code permet à un équipement récepteur de vérifier que le message qu'il reçoit n'a pas été altéré.

La fonction peut être une fonction de hashage de la donnée m et de la clé k, avec la variable k qui correspond à l'attribut d'identification des équipements nœuds u et v, et m qui correspond à l'attribut d'authentification du lien.

On comprend que le préambule d'authentification est calculé intégralement pour le premier paquet (i=0) émis sur le lien par l'équipement nœud u à destination de l'équipement nœud v et qu'ensuite, à partir de i=1, la valeur du préambule d'authentification calculée pour le paquet précédent et l'attribut d'authentification du lien sont utilisés comme variables de la fonction H(k,m). Autrement dit, dans cet exemple, seul le premier calcul se base directement sur l'attribut d'identité.

Une longueur recommandée pour le préambule d'authentification est de 32 ou 64 bits. Il s'agit en effet d'un bon compromis entre coût et sécurité.

On notera que la fonction de hashage cryptographique H(k,m) peut, si besoin, être tronquée. A titre d'exemple, on peut utiliser une fonction de hashage de type HMAC tronquée ou encore une fonction de type « standard block cipher », telle qu'une fonction AES dans le CBC-MAC mode, la dernière étant particulièrement adaptée aux systèmes embarqués faible puissance puisqu'elle permet d'implémenter à la fois le chiffrement et le hashage avec un code de taille minimale et une zone hardware minimale. Néanmoins, la contrepartie est une efficacité et une sécurité réduites.

En ce qui concerne la troncature du résultat de l'application de la fonction de hashage, on notera qu'elle peut être réalisée d'au moins trois façons :

- en supprimant des bits au début ;
- en supprimant des bits à la fin ;
- en échantillonnant selon un modèle particulier.

Dans une étape E2, le préambule d'authentification PA ainsi généré est inséré dans le préambule du paquet de données PD$_E$ à transmettre sur le lien (u, v).

Avantageusement, il est inséré le plus tôt possible dans le préambule du paquet de données PD, soit dans le préambule de la couche physique ou au plus tôt dans le préambule de la couche MAC.

Selon un aspect de l'invention, le préambule d'authentification PA peut remplacer un champ existant, tel que par exemple un mot de synchronisation ou encore un délimiteur de trame. Un avantage est de ne pas augmenter la taille du paquet de données.

De façon alternative, un nouveau champ est inséré dans le préambule, par exemple après le mot de synchronisation ou le compteur de trames.

Le paquet de données PD$_E$ est ensuite transmis sur le lien (u,v), puis traité par l'équipement nœud destinataire v. Ce dernier met en oeuvre le procédé de traitement d'un paquet de données en vue de sa réception, selon l'invention, qui va maintenant être décrit en détails.

Au cours d'une étape R1, l'équipement nœud v reçoit, dans une première phase de réception, l'en-tête H du paquet de données PD$_R$ et détecte le préambule d'authentification PA en R2.

Au cours d'une étape R4, l'équipement nœud v analyse le préambule d'authentification détecté en le comparant à un préambule d'authentification de référence qu'il a précédemment calculé pour le lien (u, v) dans une étape . Pour ce faire, l'équipement nœud v utilise des attributs du lien qu'il partage avec l'équipement nœud u.

Si on revient à l'exemple de réalisation précédemment détaillé, il s'agit des trois attributs suivants :

- l'attribut d'identification du lien ;
- l'attribut d'authentification du lien ; et
- l'attribut de fraîcheur du paquet.

L'équipement nœud récepteur v a donc calculé le préambule d'authentification de référence $\hat{F}_i^{u\to v}\big|_{K_{u-v}}$ de la même façon que l'équipement nœud émetteur u. L'équipement nœud v compare bit à bit le préambule d'authentification détecté avec le préambule d'authentification de référence qu'il a calculé localement. Si les deux valeurs sont identiques, alors l'authentification est considérée comme un succès. Sinon, c'est un échec.

On notera qu'il est particulièrement avantageux pour l'équipement nœud v de pré-calculer les valeurs potentielles des préambules d'authentification de référence pour un certain nombre de paquets susceptibles de lui être transmis par ces N voisins, N étant un entier non nul. Cela permet en effet de réduire le temps d'analyse d'un nouveau préambule reçu.

Par ailleurs, pour éviter tout risque de perte de synchronisation (« out of synch », en anglais) dû à la réception d'un paquet erroné, il est recommandé de calculer itérativement le préambule d'authentification de référence sur une fenêtre temporelle W à partir du dernier paquet authentifié avec succès. Il est donc préférable de choisir une fenêtre temporelle de calcul de largeur inférieure à la valeur du taux d'erreur sur les paquets de données. Ainsi, le nombre de valeurs de préambules d'authentifications de référence à stocker est égal à W.N.

Dans une étape R5, l'équipement nœud v décide ou non de continuer la réception du paquet de données PD$_R$, en fonction du résultat de l'étape précédente d'authentification.

Si l'authentification a été un succès, il déclenche en R6 une deuxième phase de réception des données utiles du paquet de données puis traite ses données utiles DU$_R$. En cas d'échec de l'authentification, au contraire, il stoppe la réception du paquet de données et le rejette sans avoir mis en oeuvre la deuxième phase de réception. Il en résulte que l'invention permet de protéger l'équipement nœud des effets de paquets mal-intentionnés, tout en limitant la sur-écoute.

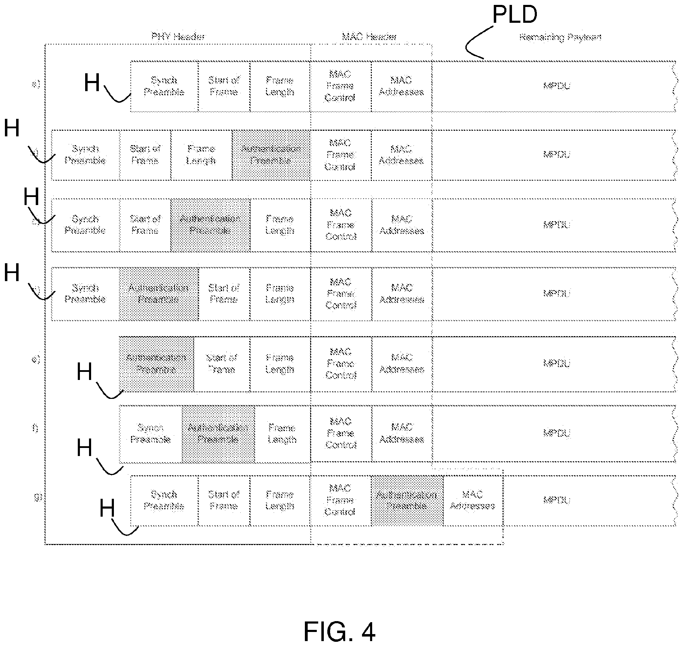

En relation avec la **figure 4,** on présente plusieurs exemples d'insertion du préambule d'authentification AP selon l'invention dans l'en-tête H d'un paquet de données PD.

La figure 4 a présente un exemple de structure classique d'un paquet de données selon le modèle de couches OSI. Un tel paquet comprend un en-tête H destinée aux données de contrôle et une partie PLD (« payload », en anglais) destinée aux données utiles. L'en-tête H comprend un en-tête de couche physique PHY-HEADER suivi d'un en-tête de couche MAC MAC-HEADER. Le paquet comprend aussi des données utiles

L'en-tête de couche physique comprend généralement les trois champs suivants :

- un préambule de synchronisation synch preamble ;
- un champ de début de trame;
- un champ de longueur de trame.

L'en-tête de couche MAC comprend généralement les deux champs suivants :

- un champ de contrôle de trames;
- un champ d'adresses;

Dans un premier exemple (b), le préambule d'authentification AP selon l'invention est inséré à la fin de l'en-tête de couche physique.

Dans un deuxième exemple (c), le préambule d'authentification AP selon l'invention est inséré dans l'en-tête de couche physique entre le champ de début de trame et le champ de longueur de trame.

Dans un troisième exemple (d), le préambule d'authentification AP selon l'invention est inséré dans l'en-tête de couche physique entre le préambule de synchronisation et le champ de début de trame.

Dans un quatrième exemple (e), le préambule d'authentification AP selon l'invention est inséré dans l'en-tête de couche physique à la place du préambule de synchronisation.

Dans un cinquième exemple (f), le préambule d'authentification AP selon l'invention est inséré dans l'en-tête de couche physique à la place du champ de début de trame.

Dans un sixième exemple (g), le préambule d'authentification AP selon l'invention est inséré dans l'en-tête de couche MAC entre champ de contrôle de trame et le champ d'adresses.

**Revendications**

1. **Procédé de traitement** d'un paquet de données à sa réception, ledit paquet de données ayant été transmis par un premier équipement nœud (EN1, u) à destination d'un deuxième équipement nœud (EN2, v) sur un lien (L12) d'un réseau de communication électronique sans fil, ledit paquet comprenant un en-tête (H) et des données utiles (DU), le procédé comprenant deux phases mises en œuvre par le deuxième équipement noeud : une première phase de réception de l'en-tête du paquet, et une deuxième phase de réception des données utiles, le procédé étant **caractérisé en ce que** la première phase comprend les étapes suivantes :

- détection (R2) d'un préambule d'authentification (PA) dans l'en-tête du paquet reçu, ledit préambule d'authentification ayant une valeur calculée au moins en fonction d'un attribut d'identification (ATT$_{IL}$), obtenu à partir d'identifiants du premier et du deuxième équipement nœud, et d'un attribut d'authentification (ATT$_{AL}$), lesdits attributs étant partagés entre le premier et le second équipement nœud ;

- génération (R3) d'un préambule d'authentification de référence en fonction desdits attributs d'identification (ATT$_{IL}$) et d'authentification (ATT$_{AL}$), ledit préambule d'authentification de référence étant calculé intégralement pour le premier paquet émis sur le lien par le premier équipement nœud, et, pour chaque paquet suivant, en fonction de la valeur du préambule d'authentification de référence calculée pour le paquet précédent et de l'attribut d'authentification (ATT$_{AL}$) ;

- authentification (R4) du lien par comparaison du préambule d'authentification détecté avec ledit préambule d'authentification de référence, l'authentification du lien étant un succès si le préambule d'authentification détecté et le préambule d'authentification de référence sont identiques ;

- décision (R5) de déclenchement de la deuxième phase de réception des données utiles du paquet de données en cas de succès de l'authentification.

2. Procédé de traitement selon la revendication 1, dans lequel l'attribut d'identification (ATT$_{IL}$) est formé par la concaténation {IDu,IDv} des identifiants du premier (u) et du deuxième (v) équipement nœud, et l'attribut d'authentification (ATT$_{AL}$) est une clé K(u,v) ou un secret partagé par les premier et deuxième équipements nœuds.

3. Procédé de traitement selon la revendication 2 dans lequel l'étape (R3) de génération d'un préambule d'authentification de référence est mise en œuvre à partir de l'attribut d'identification {IDu,IDv}, de l'attribut d'authentification K(u,v) et d'un attribut de fraîcheur (i) et d'un code de message *H(k,m)* fonction d'une donnée m et d'une clé k, selon l'équation suivante :

$$F_i^{u \to v}\big|_{K_{u-v}} = \begin{cases} H\big(\{ID_u, ID_v\}, K_{u-v}\big) & pour \quad i = 0 \\ H\big(F_{i-1}^{u \to v}\big|_{K_{u-v}}, K_{u-v}\big) & sinon \end{cases},$$

i, m et k étant des entiers non nuls.

4. **Procédé de traitement** d'un paquet de données (PD) à l'émission par un premier équipement nœud (EN1, u) d'un réseau de communication électroniques sans fil, ledit paquet de données étant destiné à être transmis à un deuxième équipement nœud (EN2, v) sur un lien (L12) du réseau de communication électronique sans fil, ledit paquet de données comprenant un en-tête (H) et des données utiles (DU), la réception du paquet de données par le deuxième équipement nœud comprenant deux phases: une première phase de réception de l'en-tête du paquet, et une deuxième phase de réception des données utiles ; ledit procédé de traitement à l'émission étant caractérisé en qu'il comprend :

- une étape d'insertion d'un préambule d'authentification (PA) dans l'en-tête du paquet de données, le préambule d'authentification ayant une valeur calculée au moins en fonction d'un attribut d'identification du lien (ATT$_{IL}$), obtenu à partir d'identifiants du premier et du deuxième équipement nœud, et d'un attribut d'authentification du lien (ATT$_{AL}$), lesdits attributs étant partagés entre le premier et le second équipement noeud ; ledit préambule d'authentification étant calculé intégralement pour le premier paquet émis sur le lien par le premier équipement nœud, et, pour chaque paquet suivant, en fonction de la valeur du préambule d'authentification calculée pour le paquet précédent et de l'attribut d'authentification (ATT$_{AL}$).

5. Procédé de traitement d'un paquet de données selon la revendication 4, dans lequel l'en-tête (H) du paquet de données comprenant au moins un en-tête de couche physique suivi d'un en-tête de couche MAC, le préambule d'authentification (PA) est inséré dans l'en-tête du paquet de données à une position dans le groupe comprenant les positions suivantes :

- à la fin de l'en-tête de la couche physique;
- dans le préambule de couche physique, entre un champ de début de trame et un champ de longueur de trame;
- dans l'en-tête de la couche physique, après un préambule de synchronisation ;
- dans l'en-tête de la couche physique, à la place du préambule de synchronisation ;
- dans l'en-tête de la couche physique, à la place du champ de début de trame ;

- dans l'en-tête de la couche MAC, après un champ de contrôle de trame.

**6.** **Dispositif de traitement** (200) d'un paquet de données (PD$_R$) à la réception, ledit paquet ayant été transmis par un premier équipement nœud (EN1) à destination d'un deuxième équipement nœud (EN2) sur un lien d'un réseau de communication électronique sans fil, le paquet comprenant un en-tête (H) et des données utiles (DU), le dispositif de traitement comprenant un module de réception (210) du paquet de données apte à recevoir le paquet de données en deux phases, une première phase de réception de l'en-tête et une deuxième phase de réception des données utiles ; ledit module comprenant des moyens aptes à commander la réception de l'en-tête du paquet de données selon la première phase pour :

- détecter un préambule d'authentification (PA) dans l'en-tête du paquet reçu, ledit préambule d'authentification ayant une valeur calculée au moins en fonction d'un attribut d'identification du lien (ATT$_{IL}$), obtenu à partir d'identifiants du premier et du deuxième équipement nœud, et d'un attribut d'authentification du lien (ATT$_{AL}$), lesdits attributs étant partagés entre le premier et le second équipement nœud ;
- générer un préambule d'authentification de référence en fonction desdits attributs d'identification (ATT$_{IL}$) et d'authentification (ATT$_{AL}$), ledit préambule d'authentification de référence étant calculé intégralement pour le premier paquet émis sur le lien par le premier équipement nœud, et, pour chaque paquet suivant, en fonction de la valeur du préambule d'authentification de référence calculée pour le paquet précédent et de l'attribut d'authentification (ATT$_{AL}$) ;
- authentifier le lien par comparaison du préambule d'authentification détecté avec ledit préambule d'authentification de référence l'authentification du lien étant un succès si le préambule d'authentification détecté et le préambule d'authentification de référence sont identiques ;
- décider le déclenchement de la deuxième phase de réception des données utiles du paquet de données en cas de succès de l'authentification.

**7.** **Dispositif de traitement** (100) d'un paquet de données (PD$_E$) à l'émission, ledit paquet de données étant destiné à être transmis par un premier équipement nœud (EN1) à un deuxième équipement nœud (EN2) d'un réseau de communication électronique sans fil sur un lien (L12) dudit réseau, ledit paquet de données comprenant un en-tête (H) et des données utiles (DU), la réception du paquet de données par le deuxième équipement nœud comprenant deux phases: une première phase de réception de l'en-tête du paquet, et une deuxième phase de réception des données utiles ; ledit dispositif de traitement étant **caractérisé en ce qu'**il comprend des moyens d'insertion d'un préambule d'authentification (PA) dans l'en-tête du paquet de données, le préambule d'authentification ayant une valeur calculée au moins en fonction d'un attribut d'identification du lien (ATT$_{IL}$), obtenu à partir d'identifiants du premier et du deuxième équipement nœud, et d'un attribut d'authentification du lien (ATT$_{AL}$), lesdits attributs étant partagés entre le premier et le second équipement noeud ; ledit préambule d'authentification étant calculé intégralement pour le premier paquet émis sur le lien par le premier équipement nœud, et, pour chaque paquet suivant, en fonction de la valeur du préambule d'authentification calculée pour le paquet précédent et de l'attribut d'authentification (ATT$_{AL}$).

**8.** **Equipement nœud** (EN) d'un réseau de communication électronique sans fil, **caractérisé en ce qu'**il comprend un dispositif de traitement d'un paquet de données à l'émission (100) selon la revendication 7 et un dispositif de traitement d'un paquet de données à la réception (200) selon la revendication 6.

**9.** **Réseau** de communication électronique sans fil (WN), **caractérisé en ce qu'**il comprend une pluralité d'équipements nœuds selon la revendication 8.

**10.** **Programme** d'ordinateur **caractérisé en ce qu'**il comprend des instructions pour la mise en œuvre d'un procédé de réception selon l'une quelconque des revendications 1 à 3, lorsque ce programme est exécuté par un processeur.

**11.** **Programme** d'ordinateur **caractérisé en ce qu'**il comprend des instructions pour la mise en œuvre d'un procédé d'émission selon la revendication 4, lorsque ce programme est exécuté par un processeur.

**Patentansprüche**

**1.** Verfahren zum Verarbeiten eines Datenpakets beim Empfangen, wobei das Datenpaket von einem ersten Knotengerät (EN1, u) an ein zweites Knotengerät (EN2, v) auf einer Verbindung (L12) eines drahtlosen elektronischen Kommunikationsnetzes übertragen wird, wobei das Paket einen Kopf (H) und Nutzdaten (DU) aufweist, wobei das Verfahren zwei Phasen aufweist, die von dem zweiten Knotengerät durchgeführt werden: eine erste Phase des Empfangs des Kopfes des Pakets und eine zweite Phase des Empfangs der Nutzdaten, wobei das Verfahren **dadurch gekennzeichnet ist, dass** die erste Phase die folgenden Schritte aufweist:

- Erkennen (R2) einer Authentifizierungspräambel (PA) im Kopf des empfangenen Pakets, wobei die Authentifizierungspräambel einen Wert aufweist, der mindestens in Abhängigkeit von einem Identifizierungsattribut ($ATT_{IL}$) berechnet wurde, das ausgehend von Kennungen des ersten und des zweiten Knotengeräts erhalten wurde, und von einem Authentifizierungsattribut ($ATT_{AL}$), wobei die Attribute zwischen dem ersten und dem zweiten Knotengerät geteilt werden;
- Erzeugen (R3) einer Referenz-Authentifizierungspräambel in Abhängigkeit von dem Identifizierungsattribut ($ATT_{IL}$) und dem Authentifizierungsattribut ($ATT_{AL}$), wobei die Referenz-Authentifizierungspräambel vollständig für das erste Paket berechnet wird, das von dem ersten Knotengerät über die Verbindung gesendet wird, und, für jedes folgende Paket, in Abhängigkeit von dem Wert der Referenz-Authentifizierungspräambel, der für das vorausgegangene Paket berechnet wurde, und dem Authentifizierungsattribut ($ATT_{AL}$);
- Authentifizierung (R4) der Verbindung durch Vergleichen der erkannten Authentifizierungspräambel mit der Referenz-Authentifizierungspräambel, wobei die Authentifizierung der Verbindung erfolgreich ist, wenn die erkannte Authentifizierungspräambel und die Referenz-Authentifizierungspräambel identisch sind;
- Entscheiden (R5) des Auslösens der zweiten Phase des Empfangens der Nutzdaten des Datenpakets bei erfolgreicher Authentifizierung.

2. Verarbeitungsverfahren nach Anspruch 1, wobei das Identifizierungsattribut ($ATT_{IL}$) durch die Verknüpfung {IDu, IDv} der Kennungen des ersten (u) und des zweiten (v) Knotengeräts gebildet wird und das Authentifizierungsattribut ($ATT_{AL}$) ein Schlüssel K(u,v) oder ein von dem ersten und dem zweiten Knotengerät geteiltes Geheimnis ist.

3. Verarbeitungsverfahren nach Anspruch 2, wobei der Schritt (R3) des Erzeugens einer Referenz-Authentifizierungspräambel ausgehend von dem Identifizierungsattribut {IDu,IDv}, dem Authentifizierungsattribut K(u,v) und einem Aktualitätsattribut (i) und einem Nachrichtencode H(k,m), Funktion eines Datenelements m und eines Schlüssels k, gemäß der folgenden Gleichung durchgeführt wird:

$$F_i^{u \to v}\big|_{K_{u-v}} = \begin{cases} H(\{ID_u, ID_v\}, K_{u-v}) & \text{für } i = 0 \\ H\left(F_{i-1}^{u \to v}\big|_{K_{u-v}}, K_{u-v}\right) & \text{ansonsten,} \end{cases}$$

wobei i, m und k ganze Zahlen ungleich null sind.

4. Verfahren zum Verarbeiten eines Datenpakets (PD) beim Senden durch ein erstes Knotengerät (EN1, u) eines drahtlosen elektronischen Kommunikationsnetzes, wobei das Datenpaket dazu bestimmt ist, an einen zweiten Netzwerkknoten (EN2, v) auf einer Verbindung (L12) des drahtlosen elektronischen Kommunikationsnetzes übertragen zu werden, wobei das Datenpaket einen Kopf (H) und Nutzdaten (DU) aufweist, wobei das Empfangen des Datenpakets durch den zweiten Netzwerkknoten zwei Phasen aufweist: eine erste Phase des Empfangens des Kopfes des Pakets und eine zweite Phase des Empfangens der Nutzdaten, wobei das Verfahren zum Verarbeiten beim Senden **dadurch gekennzeichnet ist, dass** es Folgendes aufweist:

- einen Schritt des Einfügens einer Authentifizierungspräambel (PA) in den Kopf des Datenpakets, wobei die Authentifizierungspräambel einen Wert aufweist, der mindestens in Abhängigkeit von einem Identifizierungsattribut ($ATT_{IL}$) der Verbindung berechnet wurde, das ausgehend von Kennungen des ersten und des zweiten Knotengeräts erhalten wurde, und von einem Authentifizierungsattribut ($ATT_{AL}$) der Verbindung, wobei die Attribute zwischen dem ersten und dem zweiten Knotengerät geteilt werden; wobei die Authentifizierungspräambel vollständig für das erste Paket berechnet wird, das von dem ersten Knotengerät über die Verbindung gesendet wird, und, für jedes folgende Paket, in Abhängigkeit von dem Wert der Authentifizierungspräambel, der für das vorausgegangene Paket berechnet wurde, und dem Authentifizierungsattribut ($ATT_{AL}$).

5. Verfahren zum Verarbeiten eines Datenpakets nach Anspruch 4, wobei der Kopf (H) des Datenpakets mindestens einen Kopf der physikalischen Schicht gefolgt von einem Kopf der MAC-Schicht aufweist, wobei die Authentifizierungspräambel (PA) in den Kopf des Datenpakets an einer Position aus der Gruppe eingefügt wird, die die folgenden Positionen aufweist:

- am Ende des Kopfs der physikalischen Schicht;
- in der Präambel der physikalischen Schicht zwischen einem Startfeld des Rahmens und einem Längenfeld des Rahmens;
- im Kopf der physikalischen Schicht nach einer Synchronisationspräambel;
- im Kopf der physikalischen Schicht anstelle der Synchronisationspräambel;
- im Kopf der physikalischen Schicht anstelle des Startfelds des Rahmens;
- im Kopf der MAC-Schicht nach einem Kontrollfeld des Rahmens.

**6.** Vorrichtung zum Verarbeiten (200) eines Datenpakets ($PD_R$) beim Empfangen, wobei das Paket von einem ersten Knotengerät (EN1) an ein zweites Knotengerät (EN2) auf einer Verbindung eines drahtlosen elektronischen Kommunikationsnetzes übertragen wird, wobei das Paket einen Kopf (H) und Nutzdaten (DU) aufweist, wobei die Verarbeitungsvorrichtung ein Empfangsmodul (210) für das Datenpaket aufweist, das geeignet ist, das Datenpaket in zwei Phasen zu empfangen, einer ersten Phase des Empfangens des Kopfes und einer zweiten Phase des Empfangens der Nutzdaten; wobei das Modul Mittel aufweist, die geeignet sind, das Empfangen des Kopfes des Datenpakets gemäß der ersten Phase zu steuern, um:

- eine Authentifizierungspräambel (PA) im Kopf des empfangenen Pakets zu erkennen, wobei die Authentifizierungspräambel einen Wert aufweist, der mindestens in Abhängigkeit von einem Identifizierungsattribut ($ATT_{IL}$) der Verbindung berechnet wurde, das ausgehend von Kennungen des ersten und des zweiten Knotengeräts erhalten wurde, und von einem Authentifizierungsattribut ($ATT_{AL}$) der Verbindung, wobei die Attribute zwischen dem ersten und dem zweiten Knotengerät geteilt werden;
- eine Referenz-Authentifizierungspräambel in Abhängigkeit von dem Identifizierungsattribut ($ATT_{IL}$) und dem Authentifizierungsattribut ($ATT_{AL}$) zu erzeugen, wobei die Referenz-Authentifizierungspräambel vollständig für das erste Paket berechnet wird, das von dem ersten Knotengerät über die Verbindung gesendet wird, und, für jedes folgende Paket, in Abhängigkeit von dem Wert der Referenz-Authentifizierungspräambel, der für das vorausgegangene Paket berechnet wurde, und dem Authentifizierungsattribut ($ATT_{AL}$);
- die Verbindung durch Vergleichen der erkannten Authentifizierungspräambel mit der Referenz-Authentifizierungspräambel zu authentifizieren, wobei die Authentifizierung der Verbindung erfolgreich ist, wenn die erkannte Authentifizierungspräambel und die Referenz-Authentifizierungspräambel identisch sind;
- das Auslösen der zweiten Phase des Empfangens der Nutzdaten des Datenpakets bei erfolgreicher Authentifizierung zu entscheiden.

**7.** Vorrichtung zum Verarbeiten (100) eines Datenpakets ($PD_E$) beim Senden, wobei das Datenpaket dazu bestimmt ist, von einem ersten Knotengerät (EN1) an ein zweites Knotengerät (EN2) eines drahtlosen elektronischen Kommunikationsnetzes auf einer Verbindung (L12) des Netzes übertragen zu werden, wobei das Datenpaket einen Kopf (H) und Nutzdaten (DU) aufweist, wobei das Empfangen des Datenpakets durch den zweiten Netzwerkknoten zwei Phasen aufweist: eine erste Phase des Empfangens des Kopfes des Pakets und eine zweite Phase des Empfangens der Nutzdaten; wobei das Verarbeitungsverfahren **dadurch gekennzeichnet ist, dass** es Mittel zum Einfügen einer Authentifizierungspräambel (PA) in den Kopf des Datenpakets aufweist, wobei die Authentifizierungspräambel einen Wert aufweist, der mindestens in Abhängigkeit von einem Identifizierungsattribut ($ATT_{IL}$) der Verbindung berechnet wurde, das ausgehend von Kennungen des ersten und des zweiten Knotengeräts erhalten wurde, und von einem Authentifizierungsattribut ($ATT_{AL}$) der Verbindung, wobei die Attribute zwischen dem ersten und dem zweiten Knotengerät geteilt werden; wobei die Authentifizierungspräambel vollständig für das erste Paket berechnet wird, das von dem ersten Knotengerät über die Verbindung gesendet wird, und, für jedes folgende Paket, in Abhängigkeit von dem Wert der Authentifizierungspräambel, der für das vorausgegangene Paket berechnet wurde, und dem Authentifizierungsattribut ($ATT_{AL}$) .

**8.** Knotengerät (EN) eines drahtlosen elektronischen Kommunikationsnetzes, **dadurch gekennzeichnet, dass** es eine Vorrichtung zum Verarbeiten eines Datenpakets beim Senden (100) nach Anspruch 7 und eine Vorrichtung zum Verarbeiten eines Datenpakets beim Empfangen (200) nach Anspruch 6 aufweist.

**9.** Drahtloses elektronisches Kommunikationsnetz (WN), **dadurch gekennzeichnet, dass** es eine Vielzahl von Knotengeräten nach Anspruch 8 aufweist.

**10.** Computerprogramm, **dadurch gekennzeichnet, dass** es Anweisungen zum Durchführen eines Verfahrens zum Empfangen nach einem der Ansprüche 1 bis 3 aufweist, wenn dieses Programm von einem Prozessor ausgeführt wird.

**11.** Computerprogramm, **dadurch gekennzeichnet, dass** es Anweisungen zum Durchführen eines Verfahrens zum Senden nach Anspruch 4 aufweist, wenn dieses Programm von einem Prozessor ausgeführt wird.

**Claims**

**1.** Method for processing a data packet on reception thereof, said data packet having been transmitted by a first node equipment (EN1, u) to a second node equipment (EN2, v) over a link (L12) of a wireless electronic communication network, said packet comprising a header (H) and payload data (DU), the method comprising two phases implemented by the second node equipment: a first phase of receiving the header of the packet, and a second phase of receiving the payload data, the method being **characterized in that** the first phase comprises the following steps:

- detection (R2) of an authentication preamble (PA) in the header of the packet received, said authentication preamble having a value calculated at least according to an identification attribute ($ATT_{IL}$) obtained on the basis of identifiers of the first and the second node equipment, and of an authentication attribute ($ATT_{AL}$), said attributes being shared between the first and the second node equipment;
- generation (R3) of a reference authentication preamble according to said identification ($ATT_{IL}$) and authentication ($ATT_{AL}$) attributes, said reference authentication preamble being calculated completely for the first packet transmitted over the link by the first node equipment, and, for each subsequent packet, according to the value of the reference authentication preamble calculated for the preceding packet and the authentication attribute ($ATT_{AL}$);
- authentication (R4) of the link by comparing the authentication preamble detected with said reference authentication preamble, the authentication of the link being successful if the authentication preamble detected and the reference authentication preamble are identical;
- decision (R5) to trigger the second phase of receiving the payload data of the data packet in the event of successful authentication.

**2.** Processing method according to Claim 1, wherein the identification attribute ($ATT_{IL}$) is formed by the concatenation {IDu,IDv} of the identifiers of the first (u) and of the second (v) node equipment, and the authentication attribute ($ATT_{AL}$) is a key K(u,v) or a secret shared by the first and second node equipments.

**3.** Processing method according to Claim 2, wherein the step (R3) of generating a reference authentication preamble is implemented on the basis of the identification attribute {IDu,IDv}, of the authentication attribute K(u,v) and of a freshness attribute (i) and of a message code *H(k,m)* according to a datum m and a key k, according to the following equation:

$$F_i^{u \to v}\Big|_{K_{u-v}} = \begin{cases} H\big(\{ID_u, ID_v\}, K_{u-v}\big) & for \quad i = 0 \\ H\big(F_{i-1}^{u \to v}\big|_{K_{u-v}}, K_{u-v}\big) & else \end{cases}$$

i, m and k being non-zero integers.

**4.** Method for processing a data packet (PD) on transmission by a first node equipment (EN1, u) of a wireless electronic communication network, said data packet being intended to be transmitted to a second node equipment (EN2, v) over a link (L12) of the wireless electronic communication network, said data packet comprising a header (H) and payload data (DU), the reception of the data packet by the second node equipment comprising two phases: a first phase of receiving the header of the packet, and a second phase of receiving the payload data; said method for processing on transmission being **characterized in that** it comprises:

- a step of inserting an authentication preamble (PA) into the header of the data packet, the authentication preamble having a value calculated at least according to an identification attribute of the link ($ATT_{IL}$), which is obtained on the basis of identifiers of the first and the second node equipment, and of an authentication attribute of the link ($ATT_{AL}$), said attributes being shared between the first and the second node equipment; said authentication preamble being calculated completely for the first packet transmitted over the link by the first node equipment, and, for each subsequent packet, according to the value of the authentication preamble calculated for the preceding packet and the authentication attribute ($ATT_{AL}$).

**5.** Method for processing a data packet according to Claim 4, wherein the header (H) of the data packet comprising at least one physical layer header followed by a MAC layer header, the authentication preamble (PA) is inserted into the header of the data packet at a position in the group comprising the following positions:

- at the end of the header of the physical layer;
- in the physical layer preamble, between a start-of-frame field and a frame length field;
- in the header of the physical layer, after a synchronization preamble;
- in the header of the physical layer, instead of the synchronization preamble;
- in the header of the physical layer, instead of the start-of-frame field;
- in the header of the MAC layer, after a frame check field.

**6.** Device for processing (200) a data packet ($PD_R$) on reception, said packet having been transmitted by a first node equipment (EN1) to a second node equipment (EN2) over a link of a wireless electronic communication network, the packet comprising a header (H) and payload data (DU), the processing device comprising a reception module (210) for receiving the data packet capable of receiving the data packet in two phases, a first phase of receiving the header and a second phase of receiving the payload data; said module comprising means capable of controlling the reception of the header of the data packet in the first phase in order to:

- detect an authentication preamble (PA) in the header of the packet received, said authentication preamble having a value calculated at least according to an identification attribute of the link ($ATT_{IL}$) obtained on the basis of identifiers of the first and the second node equipment, and of an authentication attribute of the link ($ATT_{AL}$), said attributes being shared between the first and the second node equipment;
- generate a reference authentication preamble according to said identification ($ATT_{IL}$) and authentication ($ATT_{AL}$) attributes, said reference authentication preamble being calculated completely for the first packet transmitted over the link by the first node equipment, and, for each subsequent packet, according to the value of the reference authentication preamble calculated for the preceding packet and the authentication attribute ($ATT_{AL}$);
- authenticate the link by comparing the authentication preamble detected with said reference authentication preamble, the authentication of the link being successful if the authentication preamble detected and the reference authentication preamble are identical;
- decide to trigger the second phase of receiving the payload data of the data packet in the event of successful authentication.

**7.** Device for processing (100) a data packet ($PD_E$) on transmission, said data packet being intended to be transmitted by a first node equipment (EN1) to a second node equipment (EN2) of a wireless electronic communication network over a link (L12) of said network, said data packet comprising a header (H) and payload data (DU), the reception of the data packet by the second node equipment comprising two phases: a first phase of receiving the header of the packet, and a second phase of receiving the payload data; said processing device being **characterized in that** it comprises means for inserting an authentication preamble (PA) into the header of the data packet, the authentication preamble having a value calculated at least according to an identification attribute of the link ($ATT_{IL}$), which is obtained on the basis of identifiers of the first and the second node equipment, and of an authentication attribute of the link ($ATT_{AL}$) , said attributes being shared between the first and the second node equipment; said authentication preamble being calculated completely for the first packet transmitted over the link by the first node equipment, and, for each subsequent packet, according to the value of the authentication preamble calculated for the preceding packet and the authentication attribute ($ATT_{AL}$) .

**8.** Node equipment (EN) of a wireless electronic communication network, **characterized in that** it comprises a device for processing a data packet on transmission (100) according to Claim 7 and a device for processing a data packet on reception (200) according to Claim 6.

**9.** Wireless electronic communication network (WN), **characterized in that** it comprises a plurality of node equipments according to Claim 8.

**10.** Computer program **characterized in that** it comprises instructions for the implementation of a reception method according to any one of Claims 1 to 3, when this program is executed by a processor.

**11.** Computer program **characterized in that** it comprises instructions for the implementation of a transmission method according to Claim 4, when this program is executed by a processor.

FIG. 1

FIG. 2

FIG. 3

FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040259529 A
- US 6229806 B